# EUROPEAN PATENT SPECIFICATION

(11) **EP 2 407 224 B1**
(45) Date of publication and mention of the grant of the patent: **06.11.2013**
(21) Application number: 11164708.7
(22) Date of filing: 04.05.2011
(51) Int. Cl.: B01B 1/00, B01D 1/00, B01J 12/00, B01J 19/24, C01B 3/34, C01B 3/38, C01B 3/48, F23C 6/04, F23C 13/04, F28D 9/00, F28D 21/00

(54) **Catalytic Combustor for a Reformer for a Fuel Cell**
Katalytische Brennkammer für einen Reformer für eine Brennstoffzelle
Chambre de Combustion Catalytique pour un Reformateur pour une Pile à Combustible

(30) Priority: 16.07.2010 KR 20100069037
(43) Date of publication of application: 18.01.2012
(73) Proprietor: Samsung SDI Co., Ltd., Yongin-si, Gyeonggi-do (KR)
(72) Inventor: Son, In-Hyuk, Gyeonggi-do (KR)
(74) Representative: Walaski, Jan Filip

(56) References cited:
- EP-A1- 2 161 061
- WO-A1-98/52868
- US-A1- 2004 154 222

## Description

The present invention relates to a combustor that provides heat to a reformer.

The reforming reaction in a fuel cell is a reaction that produces hydrogen that is used as fuel in the fuel cell from hydrocarbon-based fossil fuel, and an apparatus that performs such a reaction is referred to as a fuel processor. In addition to a reformer that performs a reforming reaction, the fuel processor may further include a reactor for decreasing the concentration of carbon monoxide if necessary and a desulfurizer for removing sulfur contained in the fuel.

In the case of an external reforming method, a fuel reformer includes a heat source and a reforming reactor. The heat source supplies heat necessary for a reforming reaction in the reforming reactor, and the reforming reactor reforms fuel to generate gas containing abundant hydrogen. In this instance, the reforming reactor reforms the supplied fuel using a steam reforming (SR or STR) method, a partial oxidation (POX) method or an autothermal reforming (ATR) method obtained by combining the two methods. Among these methods, the SR method is a method of obtaining hydrogen through a reaction of hydrocarbon fuel and steam. Since high-concentration hydrogen is obtained using the SR method, the power of a fuel cell can be increased. However, since the SR method is an endothermic reaction, external heat is necessarily supplied from the reforming reactor.

A combustor, or combustion unit, is a device that generates heat and high-temperature gas by oxidizing fuel. The heat and high temperature gas generated from the combustor may be used as a heat source for preheating of fuel or water. The combustor may be implemented using a method of directly burning fuel injected into a combustion chamber through spark ignition, a method of burning fuel through an oxidation catalyst, or the like. The device that oxidizes fuel through an oxidation catalyst is referred to as a catalyst combustor, or catalytic combustor.

Since such a combustor is operated under a high-temperature atmosphere, there have been proposed various methods for durability of providing various types of components in the interior of the combustor.

US2004/0154222, WO98/52868 and EP2161061 disclose various types of fuel reformer.

According to the invention, there is provided a combustor for a reformer according to claim 1.

An aspect of one embodiment is directed toward a combustor for a reformer, which can increase the durability of a thermocouple for measuring the internal temperature of the combustor. An aspect of one embodiment is directed toward a combustor for a reformer, which can perform separate fuel distribution and prevent flashback. An aspect of one embodiment is directed toward a connection structure between a combustor and an evaporator, which can simplify the number of components and enhance the power of a reformer.

According to an embodiment of the present invention, there is provided a combustor for a reformer. The combustor includes an inner wall, a thermocouple, a fuel supply tube, a fuel distribution portion and a first oxidation catalytic layer.

The inner wall has a shape of a hollow cylinder with a first oxidation portion in a space therein. The thermocouple extends to the first oxidation portion by passing through a top portion of the first oxidation portion so as to measure a temperature of the first oxidation portion. The fuel supply tube has a shape of a hollow cylinder surrounding the thermocouple, and has fuel discharge holes formed at a lower portion thereof. The fuel distribution portion is located below the fuel supply tube, and has distribution nozzles through which fuel is distributed. The first oxidation catalytic layer is located beneath the fuel distribution portion. The inner wall may have a shape of a hollow circular or polygonal cylinder. The fuel supply tube may have a shape of a hollow circular or polygonal cylinder.

The combustor may further include an outer wall surrounding the inner wall with a second oxidation portion in a space therebetween, a lower portion of the second oxidation portion being in fluid communication with the first oxidation portion, and a second oxidation catalyst layer in the second oxidation portion. A second oxidation catalytic layer may be located in the second oxidation portion.

The fuel discharge holes may be formed in a horizontal direction on a lower outer circumferential surface of the fuel supply tube.

The fuel distribution portion may include a nozzle plate having distribution nozzles formed therein and a thermal capacity portion with a cylindrical shape extending downward from a periphery of the nozzle plate. The thermal capacity portion may be in a shape of a circular or polygonal cylinder.

An area of the distribution nozzles may increase in proportion to a distance from a center axis of the nozzle plate.

According to an embodiment of the present invention, there is provided a reformer. The reformer includes an inner wall, an outer wall, a first oxidation catalytic layer, a second oxidation catalytic layer, a thermocouple, a fuel supply tube, a fuel distribution portion, an evaporator and a reforming portion.

The inner wall has a shape of a hollow cylinder with a first oxidation portion in a space therein. The outer wall surrounds the inner wall with a second oxidation portion in a space therebetween, and a lower portion of the second oxidation portion is in fluid communication with the first oxidation portion. The fuel distribution portion is in the first oxidation portion. The first oxidation catalyst layer is located beneath the fuel distribution portion. The second oxidation catalyst layer is located in the second oxidation portion. The thermocouple extends to the first oxidation portion by passing through a top portion of the first oxidation portion so as to measure a temperature of the first oxidation portion. The fuel supply tube has a shape of a hollow cylinder surrounding the thermocouple, and has fuel discharge holes formed at a lower portion thereof. The fuel distribution portion is located below the fuel supply tube, and has distribution nozzles through which fuel is distributed. The evaporator receives reforming fuel and water supplied thereto and evaporates the supplied water using heat energy of exhaust gas exhausted from the second oxidation catalyst layer. The evaporator discharges the reforming fuel and the evaporated water. The reforming portion receives heat energy transferred from the first and second oxidation portions to reform the reforming fuel and the evaporated water from the evaporator. The inner wall may have a shape of a hollow circular or polygonal cylinder. The fuel supply tube may have a shape of a hollow circular or polygonal cylinder.

The evaporator may include a plurality of plates formed in a multi-layered structure with a plurality of layers and flow path tubes for passing the water and exhaust gas between the layers so that the layers corresponding to the water and exhaust gas are alternately arranged. The inner wall may be welded to a second bottom plate at a bottom of the evaporator, and the outer wall may be welded to a first bottom plate at the bottom of the evaporator.

The fuel discharge holes may be formed in a horizontal direction on a lower outer circumferential surface of the fuel supply tube.

The fuel distribution portion may include a nozzle plate having distribution nozzles formed therein and a thermal capacity portion with a cylindrical shape extending downward from a periphery of the nozzle plate.

An area of the distribution nozzles may increase in proportion to a distance from a center axis of the nozzle plate.

As described above, according to embodiments of the present invention, a fuel supply tube is formed to surround a thermocouple, so that the durability of the thermocouple can be enhanced.

Also, a fuel distribution portion has a cap shape, so that its thermal capacity is increased, thereby reducing flashback. Thus, in a case where a separate flashback reduction device is not employed, the durability of the fuel distribution portion and the thermocouple can be enhanced.

Also, welding points are minimized in the connection structure between a combustor and an evaporator, so that heat exchange efficiency can be increased, and manufacturing time and cost can be saved.

The accompanying drawings, together with the specification, illustrate exemplary embodiments of the present invention, and, together with the description, serve to explain the principles of the present invention.
FIG. 1 is a block diagram schematically showing the configuration of a fuel cell system.
FIG. 2 is a longitudinal sectional view schematically showing a combustor having a different arrangement from that of the present invention.
FIG. 3 is a longitudinal sectional view schematically showing a combustor according to an embodiment of the present invention.
FIG. 4 is a cut-away perspective view showing a fuel distribution portion according to an embodiment of the present invention.
FIG. 5 is a plan view showing the fuel distribution portion according to an embodiment of the present invention.
FIG. 6 is a longitudinal sectional view schematically showing a combustor according to another embodiment of the present invention.
FIG. 7 is a longitudinal sectional view showing a connection structure between a combustor and an evaporator according to an embodiment of the present invention.

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements. When terms that indicate directions, such as top, bottom, left and right, are used without special notation, the terms indicate directions represented in the drawings.

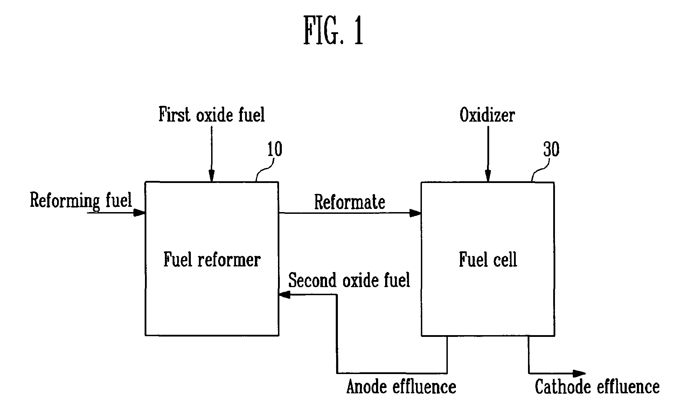

As shown in FIG. 1, a fuel reformer 10 receives reforming fuel supplied thereto and converts the supplied reforming fuel into a reformate for use in a fuel cell 30. Since a heat source is used in a case where the fuel reformer 10 converts the reforming fuel into the reformate using a steam reforming (SR) method, the fuel reformer 10 receives first fuel supplied thereto for generating heat. In this case, anode-off gas (AOG) exhausted in a non-reaction state from an anode of the fuel cell 30 may be supplied as second fuel to the fuel reformer 10 so as to enhance the efficiency of the entire fuel cell system. The fuel reformer 10 may include a reactor that reduces carbon monoxide using water-gas shift (WGS) and preferential oxidation (PROX) reactions.

An aspect of embodiments according to the present invention is directed toward a combustor that supplies heat to the fuel reformer 10 in the fuel cell system.

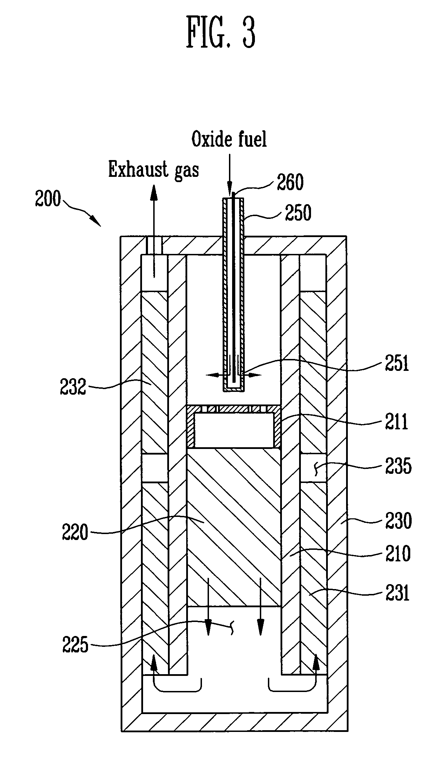

A combustor 200 will now be described with reference to FIG. 3. The combustor 200 is generally divided into a first oxidation portion 225 and a second oxidation portion 235.

The first oxidation portion 225 is in the interior of a combustor inner wall 210 formed in the shape of a hollow cylinder (e.g., circular or polygonal cylinder). The second oxidation portion 235 is a space that surrounds an outside of the combustor inner wall 210. That is, a combustor outer wall 230 is formed in the shape of a hollow cylinder (e.g., circular or polygonal cylinder), and surrounds the combustor inner wall 210. That is, the second oxidation portion 235 is a space between the combustor inner and outer walls 210 and 230. The first and second oxidation portions 225 and 235 are connected so that fluid can flow therebetween at a lower portion of the combustor 200.

As shown in FIG. 3, a thermocouple 260 extends to the interior of the first oxidation portion 225 by passing through a top portion of the first oxidation portion 225. The thermocouple 260 is a device made of two kinds of metals to measure the temperature in a wide range using the Seeback effect. The thermocouple 260 measures the temperature of the interior of the first oxidation portion 225.

A fuel supply tube 250 is formed in the shape of a hollow circular or polygonal cylinder, and surrounds the exterior of the thermocouple 260. Fuel discharge holes 251 are formed at a lower portion of the fuel supply tube 250. Here, the fuel discharge holes 251 may be formed in a horizontal direction on a lower outer surface (e.g., a circumferential surface) of the fuel supply tube 250 so that fuel flowing in the fuel supply tube 250 is supplied to the first oxidation portion 225 in the horizontal direction. That is, the fuel supply tube 250 functions to supply fuel supplied therethrough to the interior of the combustor 200 and to protect the thermocouple 260 in a high-temperature environment.

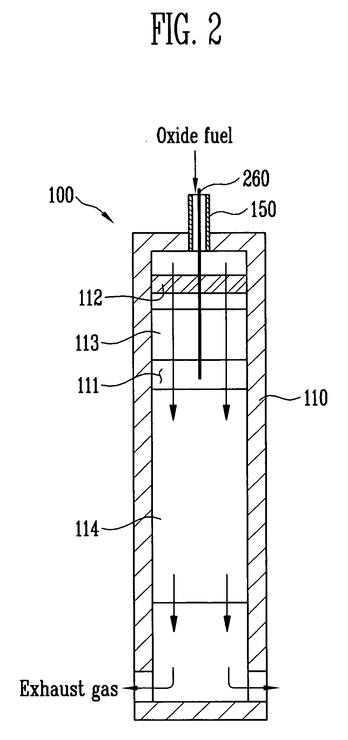

FIG. 2 shows a combustor having a different arrangement from that of the present invention. The combustor 100 of FIG. 2 has a configuration in which fuel supplied through a fuel supply tube 150 is uniformly supplied through a fuel distributor 112 and oxidized by a first oxidation catalyst layer 114. In this case, a thermocouple 260 is exposed to the interior of a first oxidation portion 113, and hence, the thermocouple 260 may have serious deterioration under the high-temperature environment in a first combustion portion 111.

Here, the fuel supplied to the combustor refers to a main fuel such as liquefied petroleum gas (LPG) for generating heat through an oxidation reaction. The fuel may include alcohol series such as methanol, hydrocarbon series such as methane and butane, fossil fuel such as naphtha, liquefied natural gas (LNG), biomass, landfill gas (LFG), or a combination thereof. The AOG refers to uncombusted gas having hydrogen as a main component, exhausted from an anode of a fuel cell after electricity is produced in a fuel cell stack.

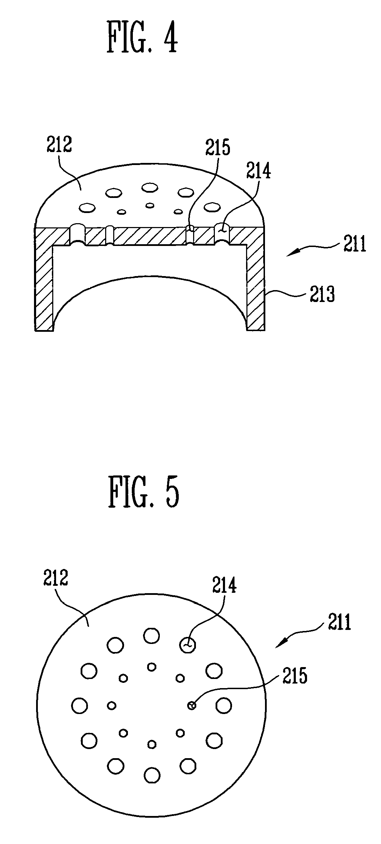

A fuel distribution portion 211 will be described with reference to FIGS. 3 to 5. The fuel distribution portion 211 is located below the fuel supply tube 251 described above to uniformly distribute the fuel. As shown in FIG. 4, the fuel distribution portion 211 is provided with a nozzle plate 212 formed in a shape corresponding to the sectional shape of the first oxidation portion 225 described above and a thermal capacity portion 213 formed to be extended dowvvard from the periphery (e.g., circumference) of the nozzle plate 212. The fuel distribution portion 211 is formed in a cap shape, thereby increasing thermal capacity. Although flashback may occur due to such a cap shape, it is not transferred to the fuel discharge holes 251 formed at the fuel supply tube 250, so that stable operation is possible.

As shown in FIG. 5, a plurality of distribution nozzles 214 and 215 are formed in the nozzle plate 212. Here, the total area of the distribution nozzles 214 and 215 formed at certain distances from the center axis of the nozzle plate 212 may be in proportion to the corresponding distances. That is, the fuel distribution portion 211 induces the combustion of the fuel to be performed at a periphery or circumference of the nozzle plate 212, having a relatively lower reaction temperature than a vicinity of the center axis of the nozzle plate 212, so that hot spots are uniformly distributed. The fuel distribution portion 211 may be made of metal, alloy, complex material or the like, which has suitable durability in a range of the temperature at which the first oxidation portion 225 is operated.

Here, since the fuel distribution portion 211 has a high thermal capacity, it serves as an anti-backfire portion. However, a separate anti-backfire portion may be provided to the fuel distribution portion 211. That is, an anti-backfire portion may be located between the fuel distribution portion 211 and the first oxidation catalyst laver 220. High-temperature hot spots are formed at an upper portion of the first oxidation catalyst layer 220, at which oxidation reaction is most actively performed. Here, the anti-backfire portion prevents the fuel from flowing backward in the direction of the fuel distribution portion 211. The anti-backfire portion may be made of a porous member or metal monolith having a cell density between about 62 and 93 cells per square cm (400 and 600 cells per square inch (CPSI)), which is similar to a support body of the first oxidation catalyst layer 220.

The first oxidation catalyst layer 220 is located in the interior of the first oxidation portion 225. The first oxidation catalyst layer 220 is provided with a mesh- or monolith-shaped support body having a space through which a fluid passes, and an active material is coated on the surface of the support body. The first oxidation catalyst layer 220 functions to increase a combustion rate by inducing stable combustion without flashback of the fuel or AOG, and to control positions at which hot spots are formed. The active material may include Pd, Pt, Co₃O₄, PdO, Cr₂O₃, Mn₂O₃, CuO, Fe₂O₃, V₂O₃, NiO, MoO₃, TiO₂ or a mixture thereof. The support body of the first oxidation catalyst layer 220 may have a cell density between about 62 and 93 cells per square cm (400 and 600 CPSI) for the purpose of proper fluid pressure and effective oxidation reaction of the fuel.

A second oxidation catalyst laver 231 is located in the interior of the second oxidation portion 235. The second oxidation catalyst layer 231 may be formed by forming a mesh- or monolith-shaped support body having a cell density between about 15.5 and 31 cells per square cm (100 and 200 CPSI), and an oxidation catalyst is coated on the surface of the support body. The support body may be made of metal such as chrome-based stainless steel (Fe-Cr) having a high melting point, alloy, complex material or the like, so as to have suitable durability at a high temperature. Like the active material in the first oxidation catalyst layer 220, the oxidation catalyst may include Pd, Pt, Co₃O₄, PdO, Cr₂O₃, Mn₂O₃, CuO, Fe₂O₃, V₂O₃, NiO, MoO₃, TiO₂ or a mixture thereof. Here, the second oxidation catalyst layer 231 may be divided into two portions spaced apart from each other at a suitable interval in the interior of the second oxidation portion 235.

Portions such as a reforming portion, an igniter and a preheater, which are not directly related to the present invention, will be omitted.

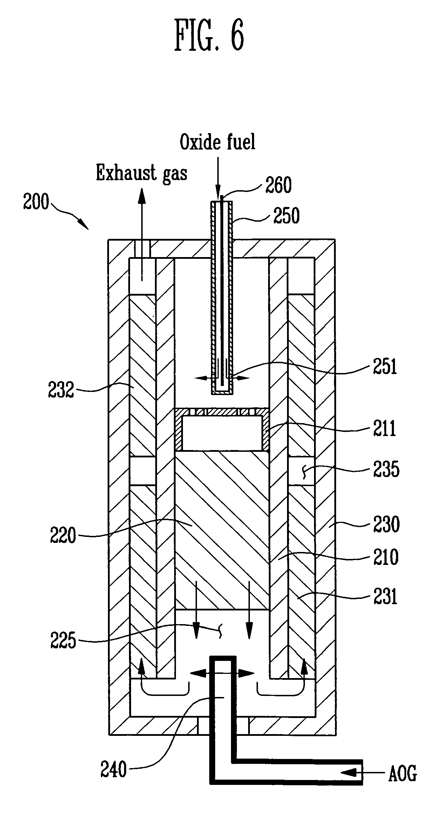

A combustor according to a second embodiment will be described with reference to FIG. 6. In this embodiment, AOG exhausted from an anode of the fuel cell 30 (see FIG. 1) is burned in the combustor 200 by recycling the AOG. That is, an AOG inlet port 240 for flowing the AOG into the first oxidation portion 225 therethrough is located at a lower portion of the first oxidation portion 225.

First, heat is generated by oxidizing the fuel in the first oxidation catalyst layer 220. Subsequently, the fuel not reacted at the lower portion of the first oxidation portion 225 and the AOG flowed into the first oxidation portion 225 through the AOG inlet port 240 are burned in flame. Finally, the non-reacted fuel and the AOG are burned in the second oxidation catalyst layers 231 and 232 while moving through the second oxidation portion 235. The exhaust gas due to the combustion is exhausted to the exterior of the combustor 200.

In this case, hot spots are increasingly formed due to the AOG flowed into the first oxidation portion 225, and it is highly likely that flashback will occur in the first oxidation portion 225, as compared with the first embodiment. However, the flashback has no influence on the fuel discharge holes due to the high thermal capacity of the fuel distribution portion 211 described above.

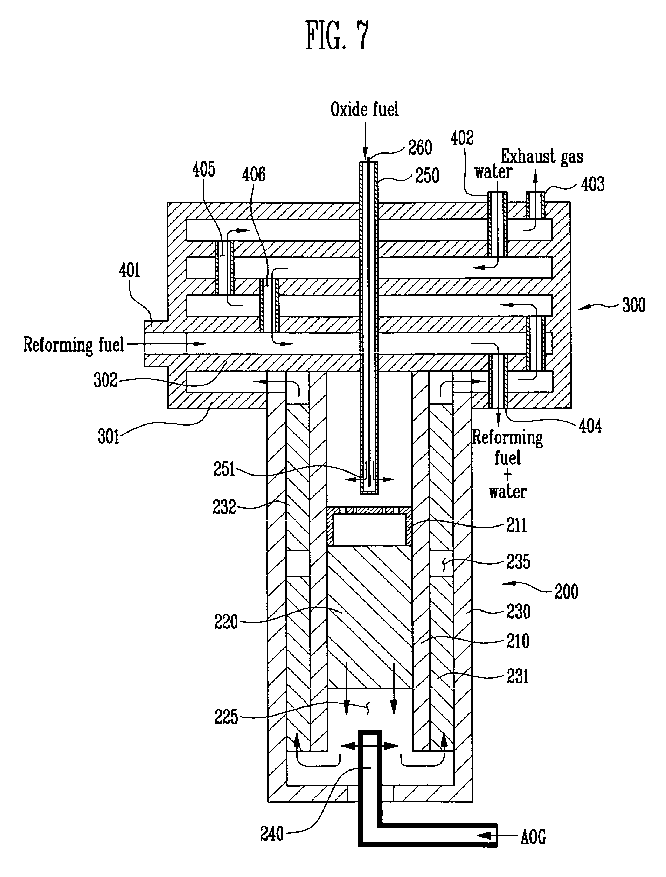

An embodiment including an evaporator 300 will be described with reference to FIG. 7.

The evaporator 300 is a component that evaporates water using heat energy of the exhaust gas exhausted from the combustor 200 and transfers the evaporated water together with the reforming fuel to a reformer. In FIG. 7, the evaporator 300 is configured by alternately arranging layers through which the water moves and layers through which the exhaust gas passes so as to increase the heat exchange efficiency of the exhaust gas. That is, the evaporator 300 is formed into a multi-layered structure divided into a plurality of plates, and allows the water and exhaust gas to move between the plates through flow path tubes, 402, 403, 404, 405 and 406. In an embodiment, the combustor inner wall 210 is welded to a second plate 302 at the bottom of the evaporator 300, and the combustor outer wall 230 is welded to a first plate 301 at the bottom of the evaporator 300. Through the aforementioned configuration, the combustor 200 and the evaporator 300 are connected to each other, so that welding points can be minimized or reduced, and heat transfer efficiency can be enhanced.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A combustor for a reformer comprising:
an inner wall (210) having a hollow cylindrical shape with a first oxidation portion (225) in a space therein;
a thermocouple (260) extending to the first oxidation portion (225) for measuring a temperature of the first oxidation portion (225);
a fuel supply tube (250) having a hollow cylindrical shape surrounding the thermocouple (260), the fuel supply tube having fuel discharge holes (251) at a lower portion thereof;
a fuel distribution portion (211) located below the fuel supply tube (250), the fuel distribution portion (211) having distribution nozzles (214, 215) through which fuel is distributed; and
a first oxidation catalyst layer (220) located below the fuel distribution portion (211).

2. The combustor according to claim 1, wherein the inner wall (210) has a hollow circular or polygonal cylindrical shape.

3. The combustor according to claim 1 or 2, wherein the fuel supply tube (250) has a hollow circular or polygonal cylindrical shape.

4. The combustor according to any one of the preceding claims, further comprising:
an outer wall (230) surrounding the inner wall (210) with a second oxidation portion (235) in a space therebetween, a lower portion of the second oxidation portion (235) being in fluid communication with the first oxidation portion (225); and
a second oxidation catalyst layer (231) located in the second oxidation portion (225).

5. The combustor according to any one of the preceding claims, wherein the fuel discharge holes (251) are arranged on a lower outer circumferential surface of the fuel supply tube (250) to allow fuel to flow horizontally into the first oxidation portion (225).

6. The combustor according to any one of the preceding claims, wherein the fuel distribution portion (211) comprises a nozzle plate (212) having the distribution nozzles (214, 215) formed therein and a thermal capacity portion (213) with a cylindrical shape extending downward from a periphery of the nozzle plate (212).

7. The combustor according to claim 6, wherein an area of the distribution nozzles (214, 215) increases in proportion to a distance from a centre axis of the nozzle plate (212).

8. The combustor according to any one of the preceding claims, further comprising an inlet port (240) for introducing anode off-gas (AOG) into the first oxidation portion (225).

9. A reformer comprising:
a combustor (200) according to any one of the preceding claims; and
an evaporator (300) for receiving reforming fuel and water supplied thereto.

10. The reformer of claim 9, comprising a combustor according to claim 4, wherein the evaporator (300) is arranged to evaporate the supplied water using heat energy of exhaust gas exhausted from the second oxidation catalyst layer (231), and the evaporator (300) is arranged to discharge the reforming fuel and the evaporated water, further comprising:
a reforming portion for receiving heat energy transferred from the first (225) and second (235) oxidation portions to reform the reforming fuel and the evaporated water from the evaporator (300).

11. The reformer according to claim 10, wherein:
the evaporator (300) comprises a plurality of plates (301, 302) formed in a multi-layered structure with a plurality of layers and flow path tubes (402, 403, 404, 405, 406) for passing the water and exhaust gas between the layers so that the layers corresponding to the water and exhaust gas are alternately arranged;
the inner wall (210) is welded to a second bottom plate (302) at a bottom of the evaporator; and
the outer wall (230) is welded to a first bottom plate (301) at the bottom of the evaporator.

## Patentansprüche

1. Brennkammer für einen Reformer, umfassend:
eine eine hohl-zylindrische Form aufweisende Innenwand (210) mit einem ersten Oxidationsabschnitt (225) in einem Raum darin;
ein sich zu dem ersten Oxidationsabschnitt (225) erstreckendes Thermoelement (260) zum Messen einer Temperatur des ersten Oxidationsabschnitts (225);
ein eine hohl-zylindrische Form aufweisendes, das Thermoelement (260) umgebendes Brennstoffzufuhrrohr (250), wobei das Brennstoffzufuhrrohr an einem unteren Abschnitt desselben Brennstoffaustrittsöffnungen (251) aufweist;
einen sich unterhalb des Brennstoffzufuhrrohrs (250) befindenden Brennstoffverteilungsabschnitt (211); wobei der Brennstoffverteilungsabschnitt (211) Verteilungsdüsen (214, 215) aufweist, durch welche Brennstoff verteilt wird; und
eine sich unterhalb des Brennstoffverteilungsabschnitts (211) befindende erste Oxidationsschicht (220).

2. Brennkammer nach Anspruch 1, wobei die Innenwand (210) eine hohlrunde oder polygonal-zylindrische Form aufweist.

3. Brennkammer nach Anspruch 1 oder 2, wobei das Brennstoffzufuhrrohr (250) eine hohlrunde oder polygonal-zylindrische Form aufweist.

4. Brennkammer nach einem der vorstehenden Ansprüche, ferner umfassend:
eine die Innenwand (210) umgebende Außenwand (230) mit einem zweiten Oxidationsabschnitt (235) in einem zwischen diesen liegenden Raum, wobei ein unterer Abschnitt des zweiten Oxidationsabschnitts (235) in Fluidverbindung mit dem ersten Oxidationsabschnitt (225) steht; und
eine sich in dem zweiten Oxidationsabschnitt (225) befindende zweite Oxidationskatalysatorschicht (231).

5. Brennkammer nach einem der vorstehenden Ansprüche, wobei die Brennstoffaustrittsöffnungen (251) auf einer unteren Außenumfangsfläche des Brennstoffzufuhrrohrs (250) angeordnet sind, um einen horizontalen Fluss des Brennstoffs in den ersten Oxidationsabschnitt (225) zu ermöglichen.

6. Brennkammer nach einem der vorstehenden Ansprüche, wobei der Brennstoffverteilungsabschnitt (211) eine Düsenplatte (212) mit den darin ausgebildeten Verteilungsdüsen (214, 215) umfasst sowie einen zylinderförmigen Wärmekapazitätsabschnitt (213), der sich von einem Umfang der Düsenplatte (212) nach unten erstreckt.

7. Brennkammer nach Anspruch 6, wobei sich ein Bereich der Verteilungsdüsen (214, 215) im Verhältnis zu einem Abstand von einer Mittelachse der Düsenplatte (212) vergrößert.

8. Brennkammer nach einem der vorstehenden Ansprüche, ferner umfassend eine Einlassöffnung (240) für die Einleitung von Anodenabgas (AOG) in den ersten Oxidationsabschnitt (225).

9. Reformer, umfassend:
eine Brennkammer (200) nach einem der vorstehenden Ansprüche; und
einen Verdampfer (300) zur Aufnahme von diesem zugeführten Reformierbrennstoff und Wasser.

10. Reformer nach Anspruch 9, umfassend eine Brennkammer nach Anspruch 4, wobei der Verdampfer (300) angeordnet ist, das zugeführte Wasser unter Nutzung von Wärmeenergie von aus der zweiten Oxidationskatalysatorschicht (231) abgezogenem Abgas zu verdampfen, und der Verdampfer (300) angeordnet ist, den Reformierbrennstoff und das verdampfte Wasser abzuführen, ferner umfassend:
einen Reformierabschnitt zur Aufnahme von Wärmeenergie, die von den ersten (225) und zweiten (235) Oxidationsabschnitten zum Reformieren des Reformierbrennstoffs und des verdampften Wassers aus dem Verdampfer (300) übertragen wird.

11. Reformer nach Anspruch 10, wobei:
der Verdampfer (300) eine Vielzahl von Platten (301, 302) umfasst, die in einem mehrschichtigen Aufbau mit einer Vielzahl von Schichten und Strömungswegrohren (402, 403, 404, 405, 406) zum Leiten des Wassers und Abgases zwischen den Schichten ausgebildet sind, so dass die dem Wasser und dem Abgas zugeordneten Schichten abwechselnd angeordnet sind;
wobei die Innenwand (210) mit einer zweiten Bodenplatte (302) an einem Boden des Verdampfers verschweißt ist; und
die Außenwand (230) mit einer ersten Bodenplatte (301) am Boden des Verdampfers verschweißt ist.

## Revendications

1. Chambre de combustion pour un reformeur comprenant :
une paroi interne (210) ayant une forme cylindrique creuse avec une première partie d'oxydation (225) dans un espace à l'intérieur de celle-ci ;
un thermocouple (260) s'étendant jusqu'à la première partie d'oxydation (225) pour mesurer une température de la première partie d'oxydation (225) ;
un tube d'alimentation en combustible (250) ayant une forme cylindrique creuse entourant le thermocouple (260), le tube d'alimentation en combustible ayant des trous de décharge de combustible (251) au niveau d'une partie inférieure de celui-ci ;
une partie de distribution de combustible (211) située en-dessous du tube d'alimentation en combustible (250), la partie de distribution de combustible (211) ayant des buses de distribution (214, 215) à travers lesquelles le combustible est distribué ; et
une première couche de catalyseur d'oxydation (220) située en-dessous de la partie de distribution de combustible (211).

2. Chambre de combustion selon la revendication 1, dans laquelle la paroi interne (210) a une forme cylindrique polygonale ou circulaire creuse.

3. Chambre de combustion selon la revendication 1 ou 2, dans laquelle le tube d'alimentation en combustible (250) a une forme cylindrique polygonale ou circulaire creuse.

4. Chambre de combustion selon l'une quelconque des revendications précédentes, comprenant en outre :
une paroi externe (230) entourant la paroi interne (210) avec une deuxième partie d'oxydation (235) dans un espace entre elles, une partie inférieure de la deuxième partie d'oxydation (235) étant en communication fluidique avec la première partie d'oxydation (225) ; et
une deuxième couche de catalyseur d'oxydation (231) située dans la deuxième partie d'oxydation (225).

5. Chambre de combustion selon l'une quelconque des revendications précédentes, dans laquelle les trous de décharge de combustible (251) sont agencés sur une surface circonférentielle externe inférieure du tube d'alimentation en combustible (250) pour permettre au combustible de s'écouler horizontalement dans la première partie d'oxydation (225).

6. Chambre de combustion selon l'une quelconque des revendications précédentes, dans laquelle la partie de distribution de combustible (211) comprend une plaque à buses (212) ayant les buses de distribution (214, 215) formées à l'intérieur de celle-ci et une partie à capacité thermique (213) ayant une forme cylindrique s'étendant vers le bas à partir d'une périphérie de la plaque à buses (212).

7. Chambre de combustion selon la revendication 6, dans laquelle une surface des buses de distribution (214, 215) augmente proportionnellement à une distance à partir de l'axe central de la plaque à buses (212).

8. Chambre de combustion selon l'une quelconque des revendications précédentes, comprenant en outre un orifice d'entrée (240) pour l'introduction d'un gaz de dégagement anodique (AOG) dans la première partie d'oxydation (225).

9. Reformeur comprenant :
une chambre de combustion (200) selon l'une quelconque des revendications précédentes ; et
un évaporateur (300) pour recevoir du combustible de reformage et de l'eau qui lui sont alimentés.

10. Reformeur de la revendication 9, comprenant une chambre de combustion selon la revendication 4, dans lequel l'évaporateur (300) est agencé pour évaporer l'eau alimentée en utilisant l'énergie thermique du gaz d'échappement sortant de la deuxième couche de catalyseur d'oxydation (231), et l'évaporateur (300) est agencé pour décharger le combustible de reformage et l'eau évaporée, comprenant en outre :
une partie de reformage destinée à recevoir l'énergie thermique transférée à partir des première (225) et deuxième (235) parties d'oxydation pour reformer le combustible de reformage et l'eau évaporée provenant de l'évaporateur (300).

11. Reformeur selon la revendication 10, dans lequel :
l'évaporateur (300) comprend une pluralité de plaques (301, 302) formées en une structure multicouche avec une pluralité de couches et des tubes formant chemin d'écoulement (402, 403, 404, 405, 406) pour faire passer l'eau et le gaz d'échappement entre les couches de sorte que les couches correspondant à l'eau et au gaz d'échappement soient disposées en alternance ;
la paroi interne (210) est soudée à une deuxième plaque inférieure (302) au fond de l'évaporateur ; et
la paroi externe (230) est soudée à une première plaque inférieure (301) au fond de l'évaporateur.
